# EUROPEAN PATENT APPLICATION

(11) **EP 4 822 200 A1**
(43) Date of publication of application: **14.10.2026**
(21) Application number: 24918988.7
(22) Date of filing: 19.12.2024
(51) Int. Cl.: F16D 3/223, F16D 3/84

(54) **CONSTANT VELOCITY JOINT**

(30) Priority: 19.01.2024 KR 20240008972
(71) Applicant: Hansae Mobility Co., Ltd., Daegu 42981 (KR)
(72) Inventor: PARK, Gun Chul, Dalseong-Gun Daegu 42981 (KR); NOH, Jung Su, Dalseong-Gun Daegu 42981 (KR); AHN, Nam Sik, Dalseong-Gun Daegu 42981 (KR)
(74) Representative: Manitz Finsterwald Patent- und Rechtsanwaltspartnerschaft mbB
(86) International application number: PCT/KR2024/020658
(87) International publication number: WO 2025/154964

(57) **Abstract**

A constant velocity joint includes an outer race, an inner race disposed within the outer race, a plurality of balls disposed between the outer race and the inner race and serving as a medium for transmitting rotational power between the outer race and the inner race, a ball cage accommodating the plurality of balls, a boot adapter disposed on one side of the outer race, and a ball retainer disposed on the other side of the outer race. The outer race and the boot adapter, and the outer race and the ball retainer, are joined to each other through contact surfaces on which a sealant layer is formed. The sealant layer is formed by pressing a pre-applied sealant pattern applied on the contact surfaces. The contact surfaces have a ten-point mean roughness (Rz) in a range of 10 to 50 µm.

## Description

### [Technical Field]

The present disclosure relates to a constant velocity joint for transmitting driving power of a vehicle.

### [Background Art]

A constant velocity joint, which is a power transmission member, is an element constituting a part of a drivetrain that transmits driving power generated by a power source of a vehicle, for example, an internal combustion engine or an electric motor, to a wheel. As is known, the constant velocity joint is configured to transmit rotational power generated by the power source of the vehicle at a constant velocity.

In general, a ball-type constant velocity joint is configured such that rotational power is transmitted between an outer race and an inner race via balls accommodated in windows of a ball cage while being disposed between the outer race and the inner race. The balls are disposed in spaces formed by outer ball grooves formed on an inner circumferential surface of the outer race and corresponding inner ball grooves formed on an outer circumferential surface of the inner race, and serve as a medium for transmitting rotational power between the outer race and the inner race. In this regard, the outer ball grooves and the inner ball grooves for accommodating the balls may be implemented in various forms, and, as one example thereof, a constant velocity joint having outer ball grooves and inner ball grooves formed to cross each other with respect to a longitudinal direction of the joint has been introduced. Such a type of constant velocity joint is referred to as a cross groove type constant velocity joint.

In a particular type of cross groove type constant velocity joint, a ball retainer for accommodating balls and a boot adapter are respectively coupled to opposite ends of an outer race in a longitudinal direction thereof. A sealant is applied to a contact surface between the outer race and the ball retainer and to a contact surface between the outer race and the boot adapter so as to improve attachment performance. Characteristics of a sealant layer are affected by a surface roughness of the contact surface of the outer race, a pressure applied during bonding, a pressing area, a sealant area, and the like. Through optimization of these conditions, it is required to realize optimal sealing characteristics by the sealant layer.

The matters described in the section related to the background technology of the present invention are provided for enhancing understanding of the background of the invention, and may include matters that do not constitute prior art already known in the art to which the present invention pertains.

### [Summary of the Invention]

### [Technical Problem]

An object of the present invention is to provide a constant velocity joint capable of improving sealing characteristics between an outer race and a boot adapter and between the outer race and a ball retainer.

The technical problems to be achieved by the present invention are not limited to the technical problems described above, and other technical problems not described herein will be understood by those skilled in the art to which the present invention pertains from the following description.

### [Technical Solution]

A constant velocity joint according to an embodiment of the present invention includes an outer race, an inner race disposed within the outer race, a plurality of balls disposed between the outer race and the inner race and serving as a medium for transmitting rotational power between the outer race and the inner race, a ball cage accommodating the plurality of balls, a boot adapter disposed on one side of the outer race, and a ball retainer disposed on the other side of the outer race. The outer race and the boot adapter, and the outer race and the ball retainer, are joined to each other through contact surfaces on which a sealant layer is formed, and the sealant layer is formed by pressing a pre-applied sealant pattern applied on the contact surfaces. The contact surfaces have a ten-point mean roughness (Rz) in a range of 10 to 50 µm.

The pre-applied sealant pattern may be pressed by a press jig, and the press jig may be configured such that the pre-applied sealant pattern is pressed by applying a pressure within a range of 1.25 to 2.5 MPa.

A ratio of a contact area of the pre-applied sealant pattern to a pressing area of the press jig may be within a range of 10 to 40%.

A ratio of an area of the sealant layer to an area of the contact surface may be within a range of 50 to 100%.

The contact surface may be formed to have the ten-point mean roughness (Rz) through one or more of turning machining, knurling pattern machining, discontinuous dimple pattern machining, and continuous groove pattern machining.

### [Effect of the Invention]

According to the present invention, sealing characteristics between the outer race and the boot adapter and between the outer race and the ball retainer may be improved through adjustment of a surface roughness of the contact surface, a pressure of the press jig, a ratio of a contact area of the pre-applied sealant pattern to a pressing area of the press jig, a ratio of an area of the sealant layer to an area of the contact surface, and the like.

In addition, various effects that may be obtained or expected from the embodiments of the present invention are disclosed directly or implicitly in the detailed description of the embodiments of the present invention.

### [Brief Description of the Drawings]

The accompanying drawings set forth below are provided to facilitate understanding of the present invention and, together with the detailed description, provide embodiments of the present invention. However, the technical features of the present invention are not limited to particular drawings, and the features disclosed in the respective drawings may be combined with one another to constitute new embodiments. The embodiments of the present specification may be better understood with reference to the following description taken in conjunction with the accompanying drawings, in which like reference numerals designate identical or functionally similar elements.
FIG. 1 is a perspective view of a driveshaft including a constant velocity joint according to an embodiment of the present invention.
FIG. 2 is a partial cross-sectional view of a constant velocity joint according to an embodiment of the present invention.
FIG. 3 is a front view of the constant velocity joint according to an embodiment of the present invention with a boot, a boot adapter, and a ball retainer removed.
FIG. 4 is a view showing a state in which outer ball grooves and inner ball grooves of the constant velocity joint according to an embodiment of the present invention are projected onto a plane.
FIG. 5 is a perspective view showing a state in which a power transmission shaft and a boot are removed from the constant velocity joint of FIG. 1.
FIG. 6 is a cross-sectional view taken along line A-A of FIG. 5.

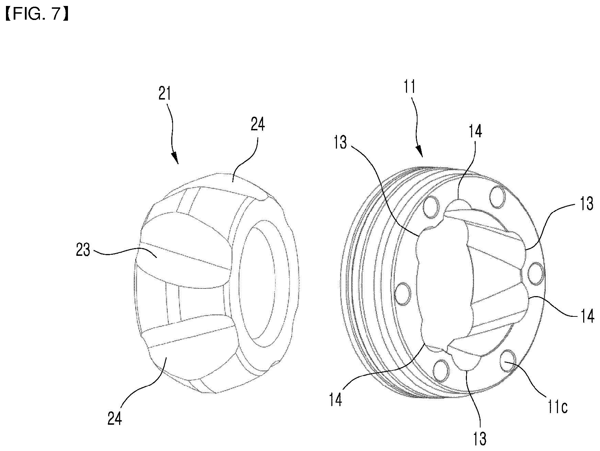

FIG. 7 is an exploded perspective view of an outer race and an inner race of the constant velocity joint according to an embodiment of the present invention.

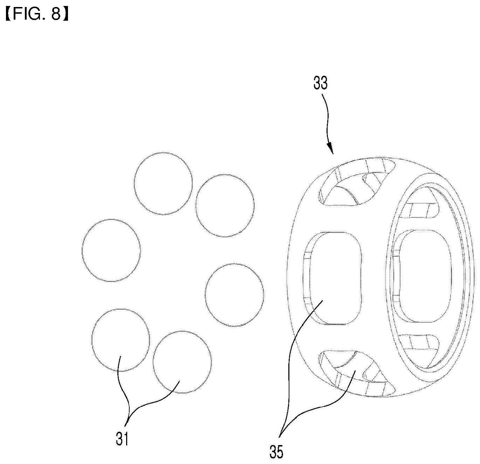

FIG. 8 is an exploded perspective view of a ball cage and balls of the constant velocity joint according to an embodiment of the present invention.
FIG. 9(a) shows a shape of a pre-applied sealant pattern formed on a contact surface of a boot adapter of the constant velocity joint according to an embodiment of the present invention, and FIG. 9(b) shows a shape of a sealant layer formed by pressing.
FIG. 10(a) shows a pattern of a pre-applied sealant formed on a contact surface of a ball retainer of the constant velocity joint according to an embodiment of the present invention, and FIG. 10(b) shows a shape of a sealant layer formed by pressing.
FIG. 11 is a view for explaining a process of pressing an applied sealant pattern using a press jig in an embodiment of the present invention.

The drawings referenced above are not necessarily drawn to scale and should be understood as presenting simplified representations of various features illustrating the basic principles of the present invention. For example, specific design features of the present invention, including particular dimensions, orientations, locations, and shapes, will be determined in part by the particular intended application and use environment.

### [Embodiments for Carrying Out the Invention]

Hereinafter, embodiments of the present invention will be described in detail with reference to the accompanying drawings so that those skilled in the art to which the present invention pertains can readily practice the present invention. However, the present invention may be embodied in various different forms and is not limited to the embodiments described herein.

The terminology used herein is for the purpose of describing particular embodiments only and is not intended to limit the present invention. As used herein, the singular forms are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, components, and/or groups thereof. As used herein, the term "and/or" includes any one and all combinations of one or more of the associated listed items. As used herein, the term "coupled" denotes a physical relationship between two components in which the components are directly connected to each other or indirectly connected through one or more intervening components.

In describing constituent elements of the present invention, terms such as first, second, A, B, (a), and (b) may be used. These terms are used only for the purpose of distinguishing one constituent element from another constituent element, and do not limit the nature, order, or sequence of the corresponding constituent element. When a constituent element is described as being "connected," "coupled," or "joined" to another constituent element, it should be understood that the constituent element may be directly connected, coupled, or joined to the other constituent element, but that another constituent element may also be "connected," "coupled," or "joined" therebetween.

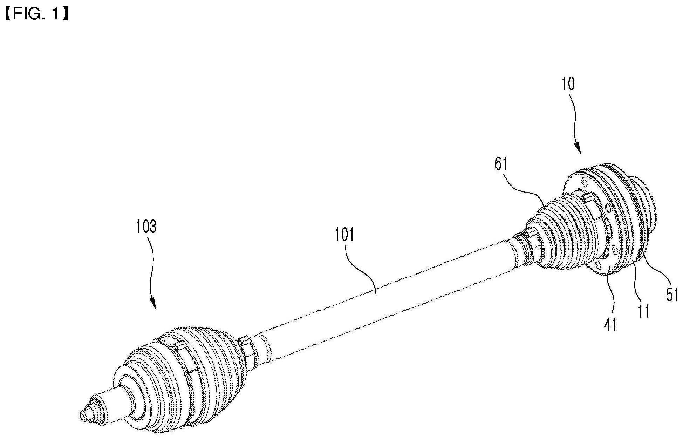

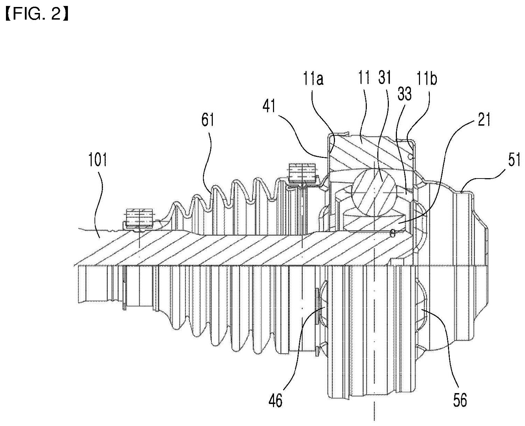

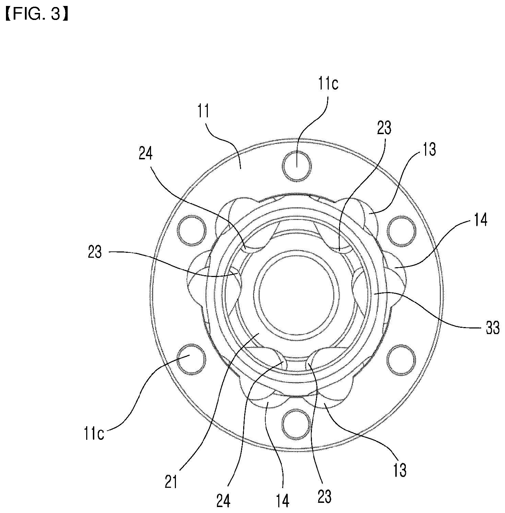

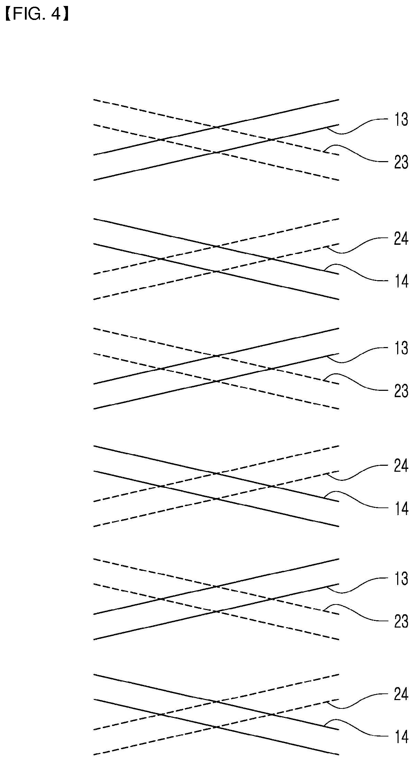

FIG. 1 is a perspective view of a constant velocity joint according to an embodiment of the present invention, and FIG. 2 is a partial cross-sectional view of a so-called cross groove type constant velocity joint according to an embodiment of the present invention. FIG. 3 is a perspective view showing a state in which a power transmission shaft, a boot, a boot adapter, and a ball retainer are removed from the constant velocity joint of FIG. 1, and FIG. 4 is a view showing a state in which outer ball grooves and inner ball grooves of the constant velocity joint according to an embodiment of the present invention are projected onto a plane. Referring to FIGS. 1 and 2, the constant velocity joint 10 according to an embodiment of the present invention may be connected to a power transmission shaft 101. The constant velocity joint 10 may be fastened to one end of the power transmission shaft 101, and a constant velocity joint 103 may be fastened to the other end of the power transmission shaft 101.

The constant velocity joint 10 may be a ball-type constant velocity joint that transmits rotational power via balls. The constant velocity joint 10 includes an outer race 11 and an inner race 21. The outer race 11 has a shape extending through in a longitudinal direction and includes first and second outer ball grooves 13 and 14 formed on an inner circumferential surface thereof. The inner race 21 is disposed in an inner space of the outer race 11 and includes first and second inner ball grooves 23 and 24 formed on an outer circumferential surface thereof. The first outer ball groove 13 and the first inner ball groove 23 form a pair, and a ball 31 is disposed in a space formed by the pair of the first outer ball groove 13 and the first inner ball groove 23. In addition, the second outer ball groove 14 and the second inner ball groove 24 form a pair, and a ball 31 is disposed in a space formed by the pair of the second outer ball groove 14 and the second inner ball groove 24. The balls 31 may be arranged along a circumferential direction, and each ball 31 may be disposed in a window 35 of a ball cage 33. The balls 31 may be arranged along the circumferential direction.

Referring to FIGS. 3 and 4, the first outer ball grooves 13 and the second outer ball grooves 14 are inclined in opposite directions with respect to the longitudinal direction, and the first and second outer ball grooves 13 and 14 are alternately arranged along the circumferential direction. Likewise, the first inner ball grooves 23 and the second inner ball grooves 24 are also inclined in opposite directions with respect to the longitudinal direction, and the first and second inner ball grooves 23 and 24 are alternately arranged along the circumferential direction. In this case, the paired first outer ball grooves 13 and first inner ball grooves 23 are inclined in opposite directions with respect to the longitudinal direction, and the paired second outer ball grooves 14 and second inner ball grooves 24 are inclined in opposite directions with respect to the longitudinal direction. A constant velocity joint having ball grooves of this type is known as a cross groove type constant velocity joint.

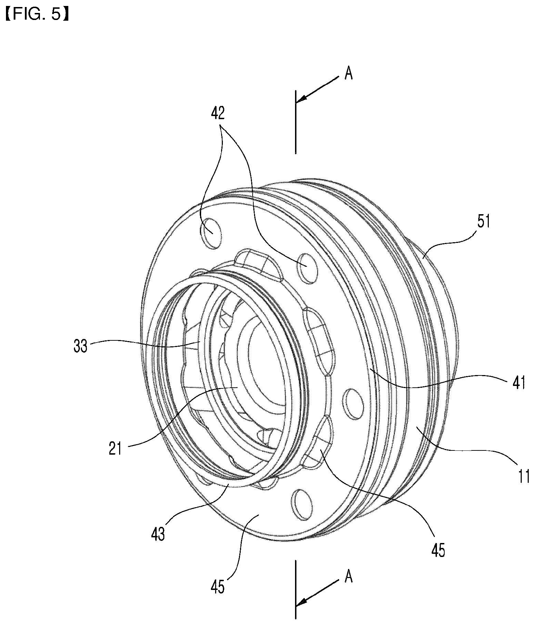

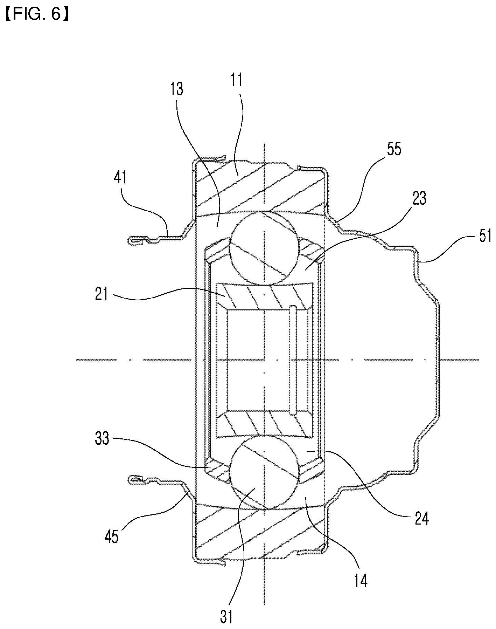

FIG. 5 is a perspective view showing a state in which a power transmission shaft and a boot are removed from the constant velocity joint of FIG. 1, and FIG. 6 is a rear perspective view of the constant velocity joint of FIG. 5. Referring to FIGS. 5 and 6, a boot adapter 41 is fastened to one side of the outer race 11, and a ball retainer 51 is fastened to the other side of the outer race 11. The outer race 11 includes a first contact surface 11a and a second contact surface 11b on opposite sides in the longitudinal direction, and the boot adapter 41 and the ball retainer 51 are fastened to the outer race 11 while being in contact with the first and second contact surfaces 11a and 11b, respectively. The outer race 11 includes a plurality of fastening holes 11c extending parallel to the longitudinal direction, and the boot adapter 41 and the ball retainer 51 also respectively include fastening holes 42 and 52 formed at corresponding positions. By inserting and fixing fastening means, such as fastening rods, into the fastening holes 42, 11c, and 52, the boot adapter 41, the outer race 11, and the ball retainer 51 may be fixed to a transmission of a vehicle.

The boot adapter 41 includes a boot mounting portion 43 to which the boot 61 is fastened, and the boot mounting portion 43 may have a substantially hollow cylindrical shape extending along the longitudinal direction of the constant velocity joint 10. As shown in FIGS. 1 and 2, one end of the boot 61 is fixed to the boot mounting portion 43, and the other end thereof is fixed to the power transmission shaft 101. In addition, the boot adapter 41 includes a ball clearance portion 45 extending radially outward from one end of the boot mounting portion 43. The ball clearance portion 45 forms a contact surface 46 that contacts the first contact surface 11a of the outer race 11. The ball clearance portion 45 may provide a clearance space when the balls 31 are moved in the longitudinal direction within the outer and inner ball grooves of the outer race 11 and the inner race 21. The fastening holes 42 described above may be formed in the ball clearance portion 45.

The ball retainer 51 includes a retaining portion 53 for securing a space for movement of the balls 31 in the longitudinal direction and preventing separation of the balls 31, and a ball clearance portion 55 extending radially outward from one end of the retaining portion 53. The ball clearance portion 55 forms a contact surface 56 that contacts the second contact surface 11b of the outer race 11. The fastening holes 52 described above may be formed in the contact surface 56.

In the embodiment of the present invention, a sealant is respectively applied to the contact surface 46 of the boot adapter 41 and the contact surface 56 of the ball retainer 51, thereby providing sufficient sealing characteristics for grease sealing between the outer race 11 and the boot adapter 41 and between the outer race 11 and the ball retainer 51.

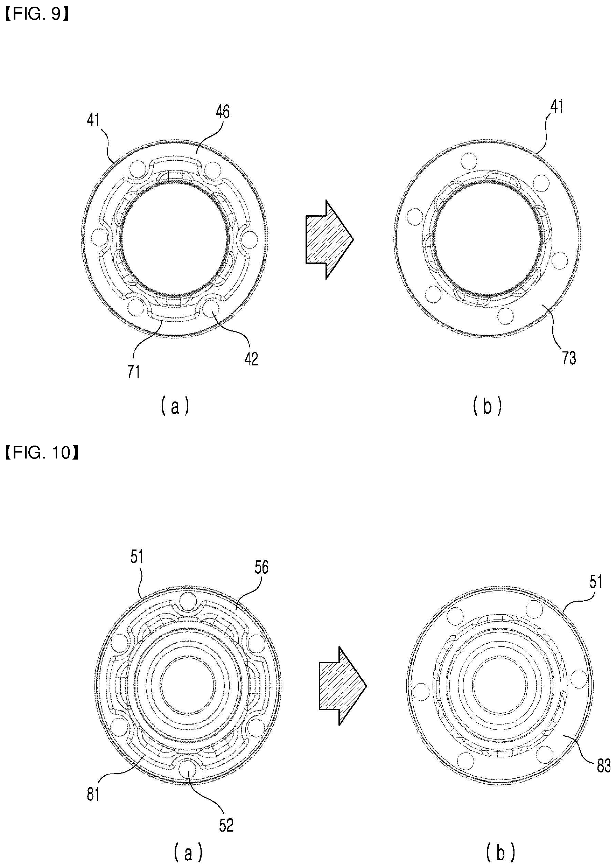

First, in the embodiment of the present invention, a ten-point mean roughness (Rz) value of a surface on which a sealant is applied may be within a range of 10 to 50 µm. In this case, the surface on which the sealant is applied may be the contact surface 46 of the boot adapter 41, the contact surface 56 of the ball retainer 51, or the contact surfaces 11a and 11b of the outer race 11. FIG. 9(a) illustrates a shape of a pre-applied sealant pattern 71 formed on the contact surface 46 of the boot adapter 41 of the constant velocity joint, and FIG. 9(b) illustrates a shape of a sealant layer 73 obtained by a change in the shape of the sealant pattern 71 caused by pressing with a jig. Further, FIG. 10(a) illustrates a pre-applied sealant pattern 81 formed on the contact surface 56 of the ball retainer 51 of the constant velocity joint, and FIG. 10(b) illustrates a shape of a sealant layer 83 obtained by a change in the shape of the sealant pattern 81 caused by pressing with a jig.

As a result of conducting actual tests, it was confirmed that no grease leakage occurred when the surface roughness (Rz) of the contact surface on which the sealant layer was formed was within a range of 11 to 25 µm. In addition, an air leakage test was conducted by applying air pressures of 0.5, 1.0, and 1.5 bar while samples having a surface roughness (Rz) of the surface to which the sealant was applied within a range of 11 to 25 µm were immersed in water. As a result, it was confirmed that excellent sealing performance was secured such that no air bubbles were generated even when an air pressure of 1.5 bar was applied and the boot was in an expanded state.

In order to secure the above-described surface roughness, the surface to which the sealant is applied may be processed using turning machining, knurling pattern machining, discontinuous dimple pattern machining, continuous groove pattern machining, or the like.

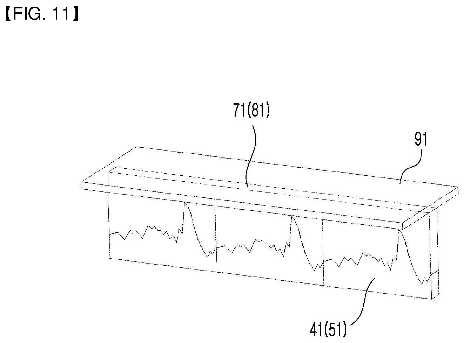

FIG. 11 is a view for explaining a process of pressing the applied pre-applied sealant pattern 71 or 81 by a press jig 91. A pressing pressure of the press jig 91 may be within a range of 1.25 to 2.5 MPa. In addition, a ratio of a contact area of the pre-applied sealant pattern 71, 81 to a pressing area of the press jig 91 may be within a range of 10 to 40%.

In addition, a ratio of an area of the sealant layer 73, 83 to an area of the contact surface 46, 56 may be within a range of 50 to 100%.

Although embodiments of the present invention have been described above, the scope of the present invention is not limited thereto and includes all changes and modifications that can be readily made by those skilled in the art to which the present invention pertains from the embodiments of the present invention and are recognized as equivalents.

## Claims

1. A constant velocity joint comprising:
an outer race;
an inner race disposed within the outer race;
a plurality of balls disposed between the outer race and the inner race and serving as a medium for transmitting rotational power between the outer race and the inner race;
a ball cage accommodating the plurality of balls;
a boot adapter disposed on one side of the outer race; and
a ball retainer disposed on the other side of the outer race,
wherein the outer race and the boot adapter, and the outer race and the ball retainer, are joined to each other through contact surfaces on which a sealant layer is formed,
wherein the sealant layer is formed by pressing a pre-applied sealant pattern applied on the contact surfaces, and
wherein the contact surfaces have a ten-point mean roughness (Rz) in a range of 10 to 50 µm.

2. The constant velocity joint of claim 1,
wherein the pre-applied sealant pattern is pressed by a press jig, and
wherein the press jig is configured to press the pre-applied sealant pattern by applying a pressure within a range of 1.25 to 2.5 MPa.

3. The constant velocity joint of claim 2,
wherein a ratio of a contact area of the pre-applied sealant pattern to a pressing area of the press jig is within a range of 10 to 40%.

4. The constant velocity joint of claim 3,
wherein a ratio of an area of the sealant layer to an area of the contact surface is within a range of 50 to 100%.

5. The constant velocity joint of claim 1,
wherein the contact surface is formed to have the ten-point mean roughness (Rz) through one or more of turning machining, knurling pattern machining, discontinuous dimple pattern machining, and continuous groove pattern machining.
